# EUROPEAN PATENT APPLICATION

(11) **EP 4 840 435 A1**
(43) Date of publication of application: **18.11.2026**
(21) Application number: 26176626.5
(22) Date of filing: 05.05.2026
(51) Int. Cl.: A61G 3/02

(54) **ARRANGEMENT FOR HANDLING PATIENT**

(30) Priority: 12.05.2025 FI 20253185
(71) Applicant: Frestems Oy, 38250 Sastamala (FI)
(72) Inventor: Vuorenoja, Ari-Matti, 38250 Sastamala (FI); Hietaranta, Marko, 38250 Sastamala (FI)
(74) Representative: Kolster Oy Ab

(57) **Abstract**

An arrangement (100) for handling a patient comprises a container (120). The arrangement further comprises a stretcher (110) to be moved between a loading position (102A) outside the container (120) and a transport position (102B) inside the container (120). The arrangement further comprises a lifting device (130) for adjusting at least a vertical position of the stretcher (110), wherein the lifting device (130) comprises an elongated string (132) configured to be connected to the stretcher (110), and a feeder unit (134) configured to feed the elongated string (132). The arrangement further comprises a guiding device (140) configured to guide the elongated string (132) of the lifting device (130) in order to adjust at least a horizontal position of the stretcher (110).

## Description

### FIELD OF THE INVENTION

The invention relates to an arrangement for handling a patient.

### BACKGROUND OF THE INVENTION

There are different kind of arrangements for handling a patient. The arrangement may comprise a lifting device that is moved from outside the container to inside the container, and vice versa. When the lifting device locates outside the container, the stretcher is lifted by the lifting device. When the lifting device locates inside the container, the stretcher is lowered by the lifting device.

However, a problem with said solution may be that forces acting on the lifting device are high. The force may cause the lifting device to bend, for example. The lifting device may therefore break easily.

There is a need for an improvement for handling the patient.

### BRIEF DESCRIPTION OF THE INVENTION

An object of the present invention is to provide a novel arrangement for handling a patient.

The invention is characterized by the features of the independent claim.

The invention is based on the idea of the arrangement for handling a patient. The arrangement comprises a container. The arrangement further comprises a stretcher to be moved between a loading position outside the container and a transport position inside the container. The arrangement further comprises a lifting device for adjusting at least a vertical position of the stretcher, wherein the lifting device comprises an elongated string configured to be connected to the stretcher, and a feeder unit configured to feed the elongated string. The arrangement further comprises a guiding device configured to guide the elongated string of the lifting device in order to adjust at least a horizontal position of the stretcher. The arrangement further comprises a loading position in which position the stretcher locates outside the container, and a transport position in which position the stretcher locates inside the container. The guiding device comprises a guider via which the elongated string of the lifting device is arranged to travel. The guiding device comprises a boom structure for positioning the guider in a movable manner. The guiding device further comprises a joint assembly about which the boom structure is configured to be turned.

An advantage of the solution is that the forces acting on the lifting device are more easily managed, for example.

According to an embodiment, the container comprises an opening that provides access into the container. The joint assembly of the guiding device is coupled inside the container at a distance from the opening, the distance being less than a width of the opening of the container. An advantage herein is that the guiding device can be easily operated.

According to an embodiment, the joint assembly of the guiding device is located, as seen from a front of the opening of the container, at a position lying between opposite side portions of the opening of the container. An advantage herein is that the guiding device can be easily operated.

According to an embodiment, the guider of the guiding device comprises at least one roll for guiding the elongated string of the lifting device. An advantage herein is that the guiding device is easy to handle.

According to an embodiment, the stretcher is configured to be suspended below the guider of the guiding device.

According to an embodiment, the guider of the guiding device locates outside the container when the arrangement is in the loading position, and wherein the guider of the guiding device locates inside the container when the arrangement is in the transport position.

According to an embodiment, the guider of the guiding device is configured to locate outside the container when the arrangement is in the loading position, and wherein the guider of the guiding device is configured to locate inside the container when the arrangement is in the transport position.

According to an embodiment, the boom structure comprises at least one boom. The at least one boom is coupled to the guider. Further, the at least one boom is configured to turn around an axis. In other words, the at least one boom is configured to turn about the axis.

According to an embodiment, the boom structure of the guiding device comprises a first boom. Further, the boom structure comprises a second boom arranged at an angle relative to the first boom, wherein the guider is coupled to the second boom. An advantage herein is that the guider can be set at a certain distance in a width direction of the container relative to the first boom. Another advantage herein is that opposite sides of the container may be utilized for storing the stretcher.

According to an embodiment, the joint assembly comprises a base coupled into the container. Further, the joint assembly comprises a cylindrical joint, wherein the cylindrical joint couples the boom structure to the base of the joint assembly, and wherein the boom structure is configured to be turned around the cylindrical joint.

According to an embodiment, the joint assembly comprises a base coupled into the container. Further, the joint assembly comprises a cylindrical joint coupling the boom structure to the base of the joint assembly, wherein the boom structure is configured to be turned about/around the cylindrical joint.

According to an embodiment, the cylindrical joint of the joint assembly is arranged parallel relative to the horizontal plane of the container.

According to an embodiment, the joint assembly of the guiding device further comprises a second cylindrical joint, wherein the second cylindrical joint couples the base of the joint assembly to the container, wherein the base of the joint assembly is configured to be turned around the second cylindrical joint.

According to an embodiment, the joint assembly of the guiding device further comprises a second cylindrical joint coupling the base of the joint assembly to the container, wherein the base of the joint assembly is configured to be turned about/around the second cylindrical joint.

According to an embodiment, the second cylindrical joint is arranged perpendicular relative to the horizontal plane of the container.

According to an embodiment, the lifting device is a winch. An advantage herein is that the winch requires only a small amount of space, for example.

According to an embodiment, the arrangement comprises at least one guiding roll via which the elongated string is guided from the lifting device to the guiding device. An advantage herein is that the elongated string can be arranged to travel in a predetermined manner inside the container.

According to an embodiment, the arrangement further comprises at least one storage frame coupled inside the container, wherein the storage frame is configured to hold the stretcher in place.

According to an embodiment, the container comprises an interior. The interior comprises a lower space and an upper space, wherein the upper space locates above the lower space. The lifting device is arranged to locate at least partially in the upper space of the interior. The guiding device is arranged to locate at least partially in the lower space of the interior.

Some embodiments of the invention are disclosed in the dependent claims.

### BRIEF DESCRIPTION OF THE DRAWINGS

In the following the invention will be described in greater detail by means of preferred embodiments with reference to the attached drawings, in which
Figure 1 shows schematically an arrangement for handling a patient, viewed from a side of the arrangement,
Figure 2 shows schematically an arrangement of Figure 1 in a transport position, viewed from a side of the arrangement,
Figure 3 shows schematically an arrangement of Figure 1 as seen obliquely from above of the arrangement, and
Figure 4 shows schematically an arrangement of Figure 1 as seen obliquely from above of the arrangement, wherein a guiding device is in a storage position.

For reasons of the clarity, some embodiments of the invention are illustrated in the figures in a simplified form. In the figures, like reference numerals identify like elements.

### DETAILED DESCRIPTION OF THE INVENTION

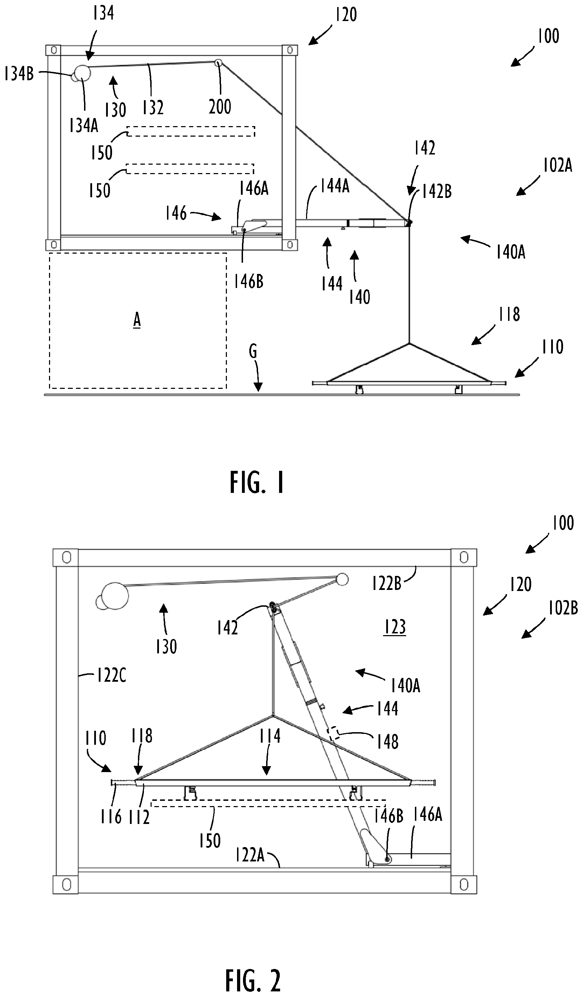

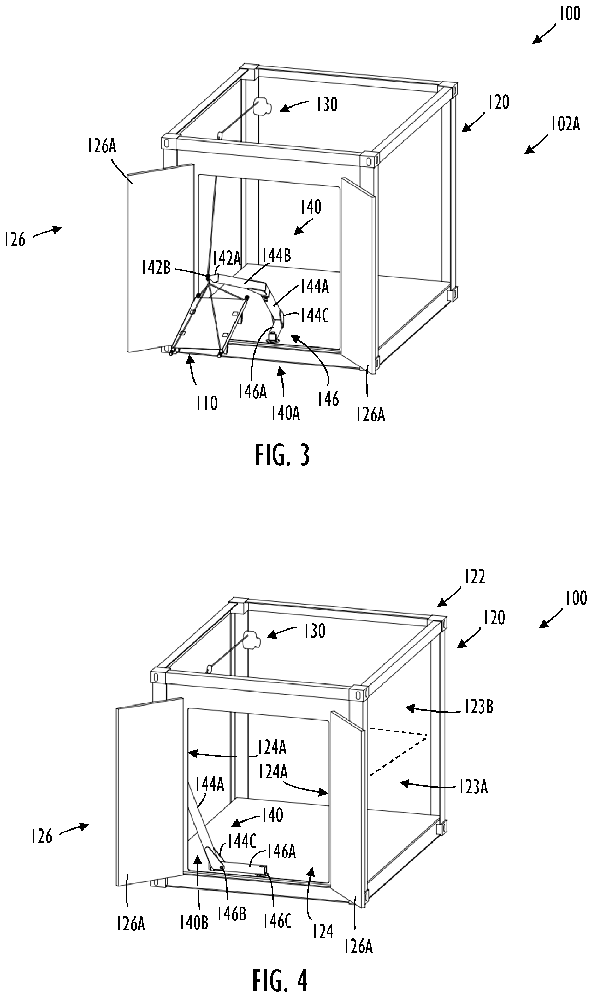

Figure 1 shows schematically an arrangement 100 for handling a patient, viewed from a side of the arrangement. Figure 1 shows the arrangement 100 in a loading position 102A. For the sake of clarity, the Figure 1 shows the container without one side wall. Figure 2 shows schematically the arrangement 100 of Figure 1 in a transport position 102B, viewed from a side of the arrangement. Figure 3 shows schematically the arrangement of Figure 1 as seen obliquely from above of the arrangement. Figure 4 shows schematically the arrangement 100 of Figure 1 as seen obliquely from above of the arrangement, wherein a guiding device is in a storage position.

The arrangement 100 of the figures relates comprises a container 120. The arrangement further comprises a stretcher 110 to be moved between a loading position 102A outside the container 120 and a transport position 102B inside the container 120. The arrangement further comprises a lifting device 130 for adjusting at least a vertical position of the stretcher 110. The lifting device 130 comprises an elongated string 132 configured to be connected to the stretcher 110. The lifting device comprises a feeder unit 134 configured to feed the elongated string 132. The arrangement further comprises a guiding device 140 configured to guide the elongated string 132 of the lifting device 130 in order to adjust at least a horizontal position of the stretcher 110. Thus, the position of the stretcher is moved at least horizontally by guiding the elongated string 132 via the guiding device 140.

For the sake of clarity, the stretcher 110 locates outside the container 120 when the arrangement 100 is in the loading position 102A. Further, the stretcher 110 locates inside the container 102 when the arrangement is in the transport position 102B.

Further referring to the loading position 102A. The stretcher further locates in front of the container. The guiding device 140 extends outside the container when in the loading position 102A. The stretcher locates below a portion of the guiding device 140. The elongated string 132 is coupled/connected to the stretcher. The stretcher is ready to be lifted by the lifting device.

Further referring to the transport position 102B. The stretcher may be set on a storage frame 150, which storage frame 150 is disclosed in more detail below. The stretcher may be temporarily locked on the storage frame 150. The elongated string may be uncoupled from the stretcher, or alternatively, the coupling between the elongated string may be maintained when in the transport position 102B. The patient can be safely transported. Thus, the container is ready to be transported when in the transport position 102B.

The stretcher 110 of the figures stores the patient. The patient is intended to lay on the stretcher 110.

The stretcher 110 of the figures comprises a frame 112. The frame 112 forms a support for the patient. The frame 112 may comprise aluminum, steel, or composite material, for example. The frame 112 may be made of beams, plates, or such, for example.

The stretcher 110 of the figures further comprises a platform 114 on which the patient lies. The platform 114 is coupled to the frame 112 of the stretcher 110. According to an example, the platform 114 is a rigid structure made of solid panels. According to a second example, the platform 114 is flexible structure made of fabric and/or webbing.

The stretcher 110 of the figures comprises handlebars 116. The stretcher 110 can be handled, by a human operator, via said handlebars 116. The handlebars 116 are coupled to the frame 112. Alternatively, or in addition, the handlebars 116 are integrated to the frame 112. The handlebars 116 may be coupled to at least one end of the stretcher 110. For example, the handlebars 116 may be coupled to opposite ends of the stretcher, for example. For the sake of clarity, instead of using handlebars 116, the stretcher 116 can be handled, by the human operator, via the frame 116, for example.

At least one of the stretcher 110 or the elongated string 132 of the figures comprises coupling means 118 for coupling the stretcher 110 to the elongated string 132. Said coupling means connects the stretcher to the elongated string so that the stretcher can be lifted and lowered safely. Said coupling means 118 form support points to the stretcher via which the forces transmits to the elongated string 132.

According to an example, said coupling means 118 comprise a plurality of wires coupled to the elongated string 132. Further, the wires are coupled to the stretcher. In more detail, the wires are coupled to the corners of the frame 112 of the of the stretcher 110. The frame 112 may comprise mounting points for the wires. The mounting point may be a hole arranged through the frame, or a link coupled to the frame, for example.

According to a second example, said coupling means are formed by the elongated string 132. A predetermined portion of the elongated string 132 is separated to a plurality of elongated strigs that are coupled the stretcher. There is a connection point arranged to each end of the plurality elongated strings. The connection point is coupled to the stretcher. For example, said connection point is a link that corresponds to a connection point arranged to the frame of the stretcher.

According to a third example, the lifting device 130 comprises at least two elongated strings 132. At least two elongated strings are coupled to the stretcher 110. At least two elongated strings are arranged, via the guiding device 140, to the stretcher. At least two elongated string may be arranged to opposite ends of the stretcher, or in more detail, at opposite ends of the frame of the stretcher. During lifting the elongated strings are operated in a predetermined manner in order to maintain a horizontal orientation of the stretcher, for example.

According to a fourth example, the arrangement comprises at least two lifting devices. At least two elongated strings are coupled to the stretcher. At least two elongated strings are arranged, via the guiding device 140, to the stretcher. At least two elongated string may be arranged to opposite ends of the stretcher, or in more detail, at opposite ends of the frame of the stretcher. During lifting the elongated strings are operated in a predetermined manner in order to maintain a horizontal orientation of the stretcher, for example.

The container 120 of the figures is configured to receive the stretcher. Further, the container 120 is configured to store other equipment. As seen in the figures, the lifting device 130, and the guiding device 140 is set into the container. The container 120 may be called a compartment, a storage unit, a transport unit, a transport equipment, and/or a protective housing, for example. The container may be a separate structure configured to be coupled to other structure, or the container may be integrated to be a part of a structure of an apparatus A, for example.

The container 120 of the figures comprises a floor structure 122A, a roof structure 122B, and a wall structure 122C between the floor structure 122A and the roof structure 122B. The floor structure 122B, and/or the roof structure 122B, forms a horizontal plane of the container 120. Said structures forms an exterior 122.

The container 120 of the figures comprises an interior 123, i.e., an inner space. The interior 123 comprises a lower space 123A and an upper space 123B. The upper space 123B locates above the lower space 123A. The lower space 123A locates between the floor structure 122C and the upper space 123B. The upper space 123B locates between the roof structure 122B and the lower space 123A. The lower space 123A and the upper space 123B are shown schematically in the figure 4.

The interior 123 of the container 120 of the figures forms an inner space. The interior is formed between the wall structure 122C. Further, the interior is formed between the floor structure 122A and the roof structure 122B.

According to an example, the container comprises one or more additional equipment arranged to the lower space 123A of the container 120. The equipment may be at least one seat, a storage device, or a table, for example. Said additional equipment are not shown in the figures.

The container 120 of the figures comprises an opening 124 that provides an access to the interior of the container 120. The opening locates at the wall structure 122C. The opening 124 is arranged to the wall structure 122C. Alternatively, the opening 124 replaces the wall structure 122C from at least one side of the container 120. The stretcher is configured to be moved through the opening 124.

The opening 124 of the container 120 of the figures has opposite side portions 124A. The opposite side portions 124A form the width of the opening 124 of the container 120.

The container 120 of the figures comprises a door assembly 126 arranged to the opening 124 of the container 120. The door assembly 126 comprises one or more doors 126A. According to an example, as shown in the figures, the door assembly 126 comprises two doors 126A.

The container 120 of the figures is configured to be arranged on the ground G and/or an apparatus A. The apparatus A may be a motor vehicle or another container. The motor vehicle may be, for example, an ambulance, a truck, or any other motor that has a space for storing a container. The container 120 may be integrated to be part of the apparatus A.

The lifting device 130 of the figures adjusts at least a vertical position of the stretcher 110. When the stretcher is outside the container, the stretcher is lifted away from the ground G, and/or lowered towards the ground G. When the stretcher is inside the container, the stretcher is lifted away from the floor structure of the container, and/or lowered towards the floor structure of the container.

The lifting device 130 of the figures is arranged inside the container 120. Thus, the lifting device 130 is arranged to the interior 123 of the container 120. In more detail, the lifting device 130 is arranged to the upper space 123B of the interior 123. The fixing point of the lifting device 130 locates in the upper space 123B of the interior 123. An advantage herein is that there is more space for other equipment in the lower space 123A of the container 120.

The elongated string 132 of the lifting device 130 of the figures is connected to the stretcher 110. In other words, the elongated string 132 is coupled to the stretcher 110. The elongated string 132 is a wire, a cable, or a rope, for example. The elongated string may be a chain. The elongated string 132 can be made from metal wires, natural fibres, synthetic fibers, or a combination of them, for example. The thickness of the elongated string 132 is dimensioned so that the elongated string 132 bends when traveling via the support rolls and/or the guiders. Further, the thickness of the elongated string 132 is dimensioned so that the elongated string withstands a predetermined load.

According to an example, the elongated string is a cable, wherein said cable is a steel cable.

The feeder unit 134 of the lifting device 130 of the figures is configured to feed the elongated string 132. Thus, the feeder unit 134 is configured to feed the elongated string 132 to the feeder unit 134 and out from the feeder unit 134. In other words, the feeder unit 134 is configured to adjust the length of the elongated string 132 between the feeder unit 134 and the stretcher 110.

The feeder unit 134 of the figures comprises a storage unit 134A for storing the elongated string 132. The feeder unit 134 adjusts the vertical position of the stretcher by feeding the elongated string to the storage unit and out from the storage unit. According to an example, the storage unit comprises a rod, a drum, or a plurality of rods arranged circularly, about/around which the elongated string is configured to be wound. Further, the storage unit further comprises side plates for keeping the elongated string 132 between the side plates.

The feeder unit 134 of the figures comprises a drive unit 134B. The drive unit 134B may be a motor, and/or a manual drive, for feeding the elongated string 134. The motor may be an electric motor, for example. Thus, the operation of the motor and/or the manual drive adjusts the vertical position of the stretcher. According to an example, the feeder unit 134 further comprises a gear unit coupled between the motor and the storage unit, and/or between the manual drive and the storage unit.

According to an example, the lifting device 130 is a winch. The elongated string 132 is wound about/around the storage unit 134A. The elongated string 132 is configured to be reeled in and out from the storage unit 134A. The storage unit 134A is driven by the drive unit 134B.

The arrangement 100 of the figures comprises at least one guiding roll 200 via which the elongated string 132 is guided from the lifting device 130 to the guiding device 140. The elongated string 132 is arranged to travel via the at least one guiding roll 200. The at least one guiding roll 200 of the arrangement 200 is arranged to the upper space 123B of the interior 123 of the container 120. An advantage of the guiding roll 200 is that a direction of the pulling force directed to the feeder unit 134 remains the same. The at least one guiding roll 200 may form a fulcrum.

The stretcher 110 of the figures is configured to locate below the at least one guiding roll 200 when the stretcher is in the transport position 102B. The storage frame 150 may also locate below the at least one guiding roll 200. The at least one guiding roll 200 is coupled to the roof structure 122B of the interior 123 of the container 120. Alternatively, or in addition the at least one guiding roll 200 is coupled to the wall structure 122C of the interior 123 of the container 120.

The guiding device 140 of the figures adjusts at least a horizontal position of the stretcher 110. For the sake of clarity, the guiding device 140 has an affect to the route of the elongated string 132, whereby the guiding device 140 may further adjust a vertical position of the stretcher 110. Thus, the guiding device may adjust the horizontal position and the vertical position of the stretcher.

The guiding device 140 of the figures comprises a guider 142 via which the elongated string 132 of the lifting device 130 is arranged to travel. The elongated string 132 of the lifting device 130 is arranged to travel via the guider 142. The direction of the elongated string alters from one direction to another direction when guided via the guider 142.

The stretcher 110 is configured to be suspended below the guider 142 of the guiding device 140. The stretcher 110 follows the movement of the guider 142 in a predetermined manner. Thus, the guider 142 forms a fulcrum.

According to an example, the elongated string 132 extend freely from the guider 142 to the stretcher 110.

The guider 142 of the guiding device 140 of the figures comprises a body 142A. The body 142A comprises a connection point(s) for receiving at least one roll 142B. The connection point may be a hole, for example. The body 142A may form a groove or an opening via which the elongated string travels. The body 142A is coupled to a boom structure 144, which boom structure 144 is disclosed in more detail below. Alternatively, the body 142A is integrated to the boom structure 144. The body 142A may be formed to have U-shape, for example.

The guider 142 of the figures further comprises at least one roll 142B for guiding the elongated string 132 of the lifting device 130. The at least one roll 142B is coupled to the body 142A. Alternatively, the at least one roll 142B is coupled directly to the boom structure. The at least one roll 142B can be coupled to the body 142A with a pin, for example. The at least one roll 142B may rotate during the elongated string 132 travels through the guider 142, thereby lowering frictional forces between the guider and the elongated string.

According to an example, the guider 142 comprises at least two rolls 142B coupled to the body 142A. The at least two rolls form a route between them. The elongated string is arranged to travel via between the at least two rolls.

The guider 142 of the guiding device 140 of the figures locates outside the container 120 when the arrangement 100 is in the loading position 102A. Thus, the guider 142 is configured to locate outside the container 120 when the arrangement 100 is in the loading position 102A. This ensures that the stretcher is also outside the container.

The guider 142 of the guiding device 140 of the figures locates inside the container 120 when the arrangement 100 is in the transport position 102B. Thus, the guider 142 is configured to locate inside the container when the arrangement 100 is in the transport position 120B. This ensures that the stretcher is also inside the container. The guider locates between the stretcher 110 and the roof structure of the container when the arrangement 100 is in the transport position 102B. The guider 142 may locate above the storage frame 150 when the arrangement is in the transport position 102B.

The guiding device 140 of the figures comprises a boom structure 144 for positioning the guider 142 in a movable manner. The boom structure 144 is coupled/connected to the guider 142. The boom structure 144 is configured to swivel about/around an axis. The axis locates inside the container. The axis is formed by the joint assembly 146 disclosed in more detail below.

The guider 142 of the figures is fixed to the boom structure 144. Thus, the guider 142 stays in place relative to the fixing point of the boom structure 144. The guider 142 may be coupled permanently or in removable manner to the boom structure.

The boom structure 144 of the guiding device 140 of the figures comprises a first boom 144A. The first boom 144A is coupled to a joint assembly 146. The boom structure 144 further comprises a second boom 144B arranged at an angle relative to the first boom 144A. The guider 142 is coupled/arranged to the second boom 144B. The angle between the first boom and the second boom may be 90 degrees +/- 50 degrees, 90 degrees +/- 30 degrees, or 90 degrees +/- 15 degrees, for example. The second boom 144B herein provides the first boom 144A to be set at a certain distance from the wall structure of the container in the width direction of the container. An advantage herein is that there is more space for other equipment inside the container and near the wall structure of the container.

According to an example, the second boom 144B is dimensioned so that it is capable to extend near to both opposite side walls of the container. The stretchers may be set at both opposite side walls of the container. There may be storage frames 150 at both opposite side walls of the container, for example. In this example, the boom structure 144 can be turned about/around the second cylindrical joint 146C of the joint assembly, which second cylindrical joint 146C is disclosed in more detail below. Further referring to this example, the arrangement may comprise at least two guiding rolls 200. Said at least two guiding rolls 200 are located at opposite sides of the container. Said guiding rolls 200 may be further located above the storage frames 150.

The boom structure 144 of the guiding device 140 of the figures further comprises a stem part 144C. The stem part 144C couples the first boom 144A to the joint assembly 146. The stem part 144C forms an offset between the first boom 144A and the joint assembly 146. In more detail, the stem part 144C forms an offset between the first boom 144A and the cylindrical joint 146B of the joint assembly 146.

According to an example, the boom structure 144 comprises at least one boom. The at least one boom is configured to be turned about/around the axis. The at least one boom forms a lever arm between the guider 142 and a point about/around which the boom structure 144 is configured to be turned. The at least one boom is configured to swivel about/around a joint assembly 146. The guider 142 is connected/coupled to the at least one boom.

The guiding device 140 of the figures comprises a joint assembly 146 about/around which the boom structure 144 is configured to be turned. The joint assembly 146 of the guiding device 140 is coupled inside the container 120. The joint assembly 146 locates in the lower space 123A of the container 120. The fixing point between the joint assembly and the container locates in the lower space 123A. The joint assembly 146 of the guiding device 140 may be coupled/connected a floor structure 122A of the container 120, for example.

The boom structure 144 of the figures is rotatably coupled to the joint assembly 146. Thus, the boom structure 144 is configured to rotate about the joint assembly 146.

The joint assembly 146 of the guiding device 140 of the figures is coupled inside the container 120 at a distance from the opening 124, the distance being less than a width of the opening 124 of the container 120. According to an example as shown in the figures, the joint assembly 146 is coupled adjacent to the opening 124.

The joint assembly 146 of the guiding device 140 of the figures is coupled inside the container at a distance from the opening 124, the distance being less than the distance between the guider 142 and the joint assembly 146. In more detail, the joint assembly 146 of the guiding device 140 is coupled inside the container at the distance from the opening 124, the distance being less than the distance between the guider 142 and the cylindrical joint 146B of the joint assembly 146.

The joint assembly 146 of the guiding device 140 of the figures is located, as seen from a front of the opening 124 of the container 120, at a position lying between opposite side portions 124A of the opening 124 of the container 120. According to an example as shown in the figures, the joint assembly 124 is located in the middle of the opening 124.

The guider 142 of the figures turns when the boom structure 144 is turned about/around the joint assembly 146. The guider is configured to be moved from outside the container into the container when the boom structure 144 is turned about/around the joint assembly. The guider is configured to be moved from inside to outside the container when the boom structure 144 is turned about/around the joint assembly. Thus, the guider has a vertical component of movement and a horizontal component of movement when the guider 142 is turned relative to the joint assembly 146.

The joint assembly 146 of the guiding device 140 of the figures comprises a base 146A, i.e., a body. The base 146A forms an axis about/around which the boom structure is configured to be turned. The base 146A comprises a connection point for the boom structure 144. The connection point may be a hole, for example. Said connection point may be called a first connection point.

Further, the base 146A comprises a connection point for the container. The connection point may be a hole, for example. The base 146A may be fixedly coupled to the container. Alternatively, the base may be coupled, in a movable manner, to the container. Said connection point may be called a second connection point.

The base 146A of the joint assembly 146 comprises/is a boom. Alternatively, or in addition, the base 146A comprises a piece made via casting process, and/or plurality of plate part coupled together, for example.

The base 146A of the figures extends at least horizontally. The first connection point and the second connection point have a distance at least in a horizontal direction.

The joint assembly 146 of the figures comprises a cylindrical joint 146B that couples the boom structure 144 to the joint assembly 146. In more detail, the cylindrical joint 146B couples the boom structure 144 to the base 146A of the joint assembly 146. The boom structure 144 is configured to turn about/around the cylindrical joint 146A. The cylindrical joint 146B is inserted into the connection point of the base 146A, for example. Said cylindrical joint 146B may be called a first cylindrical joint.

According to an example, the cylindrical joint 146B of the joint assembly 146 is arranged parallel to a horizontal plane of the container. The horizontal plane of the container may be a floor structure of the container, for example. Thus, the cylindrical joint 146B may locate parallel relative to the floor structure of the container, for example. The cylindrical joint 146B may be set parallel to the horizontal plane of the container, with an angular deviation of +/- 25 degrees, or +/- 10 degrees, for example.

The joint assembly 146 of the guiding device 140 of the figures further comprises a second cylindrical joint 146C that couples the joint assembly 146 to the container 120. The base 146A is configured to be turned about/around the second cylindrical joint 146C. The second cylindrical joint 146C couples the base 146A of the joint assembly 146 to the container in a movable manner. The second cylindrical joint is coupled to the second connection point of the base of the joint assembly.

According to an example, the second cylindrical joint 146C is arranged perpendicular to the horizontal plane of the container. Alternatively, or in addition, the second cylindrical joint 146C is set perpendicular relative to the first cylindrical joint 146B. The horizontal plane of the container may be the above-mentioned floor structure of the container, for example. The second cylindrical joint 146C may be set perpendicular relative to the horizontal plane of the container with an angular deviation of +/- 25 degrees, or +/- 10 degrees, for example.

According to an example, the second cylindrical joint 146C is a pin with a flange. The pin is coupled to the flange. The flange has mounting holes via which the second cylindrical joint is mounted to the container. The pin is mounted to the base 146A of the joint assembly 146.

According to a second example, the second cylindrical joint 146C is a slewing bearing, i.e., a turntable bearing. The arrangement may comprise a force device coupled to the second cylindrical joint. The force device may be a motor, or a linear actuator, for example.

The guiding device 140 of the figures comprises/has an operation position 140A. When the guiding device 140 is in the operation position, the guiding device 140 can be used for lifting and lowering the stretcher. Further, the guiding device 140 can be used for moving the stretcher from outside to inside the container. Further, the guiding device 140 can be used for moving the stretcher from inside to outside the container. The joint assembly 146C of the guiding device 140 is oriented so that the guider 142 can be moved from outside to inside the container, and vice versa.

The guiding device 140 of the figures comprises/has a storage position 140B. The second cylindrical joint 146C provides the guiding device 140 to be set to the storage position 140B, which warehouse position 140B is shown in the figure 4B, for example. The guiding device 140 may be set to the storage position when the guiding device is not used, for example. For example, the guiding device 140 may be set to the storage position when the container is moved from a current location to another location, i.e., from a first location to a second location. The guiding device 140 is set to the storage position by turning the guiding device 140 via the joint assembly. In more detail, the guiding device 140 is turned relative to the second cylindrical joint 146C. Thus, the base 146A of the joint assembly 140 is turned to a predetermined position. According to an example, the guiding device 140 locates adjacent to the opening of the container. In more detail, the base 146A of the joint assembly 140 locates parallel to the opening of the container. In this example, the guiding device 140 locates adjacent to one door of the door assembly of the container, which said door is in the closed position.

The guiding device 140 of the figures comprises one or more handles 148 for operating the guiding device 140. The handles 148 allow a human operator to turn the guiding device 140 between the loading position 102A and the transport position 102B. The handle 148 may be a separate part coupled to the guiding device 140. The handle 148 may be integrated to the guiding device. For example, the boom structure may be used as the handle 148.

The guiding device 140 of the figures comprises a clamping mechanism configured to clamp to the elongated string 132, thereby providing the guiding device 140 to be turned about/around the joint assembly. The guiding device 140 is turned via the operation of the lifting device 130. In more detail, the guiding device is moved from the loading position 102A towards the transport position 102B. The clamping mechanism comprises a first position, in which first position the clamping mechanism prevents the elongated string to travel via the guider 142 of the guiding device 140. The guiding device 140 can be turned in the first position 102B of the clamping mechanism. Further, the clamping mechanism comprises a second position, in which second position the clamping mechanism allows the elongated string to travel via the guider 142 of the guiding device 140. The clamping mechanism may be coupled to the guider 142.

A method of the arrangement 100 is disclosed in more detail as follows. The arrangement is in the loading position 102A. The guiding device 140 extends outside the container. In more detail, the guider 142 of the guiding device 140 locates outside the container. The stretcher locates outside the container. The stretcher is lifted, by the lifting device 130, to locate in front of the opening of the container 120. Further, the stretcher is lifted to locate near the guiding device 140. Said lifting is executed by feeding in the elongated string. The guiding device 140 is moved from outside the container to inside the container. Thus, the guiding device 140 is turned about/around the joint assembly. The stretcher locates below the guider 142 and thereby follows the guiding device 140. The stretcher is lowered by the lifting device. The stretcher may be lowered on the storage frame 150, for example. Said lowering is executed by feeding out the elongated string.

It will be obvious to a person skilled in the art that, as the technology advances, the inventive concept can be implemented in various ways. The invention and its embodiments are not limited to the examples described above but may vary within the scope of the claims.

## Claims

1. An arrangement (100) for handling a patient, wherein the arrangement (100) comprises
a container (120),
a stretcher (110) to be moved between a loading position (102A) outside the container (120) and a transport position (102B) inside the container (120),
a lifting device (130) for adjusting at least a vertical position of the stretcher (110), wherein the lifting device (130) comprises an elongated string (132) configured to be connected to the stretcher (110), and a feeder unit (134) configured to feed the elongated string (132), and
a guiding device (140) configured to guide the elongated string (132) of the lifting device (130) in order to adjust at least a horizontal position of the stretcher (110), wherein the guiding device (140) comprises a guider (142) via which the elongated string (132) of the lifting device (130) is arranged to travel, a boom structure (144) for positioning the guider (142) in a movable manner, and a joint assembly (146) about which the boom structure (144) is configured to be turned.

2. The arrangement (100) as claimed in claim 1, wherein
the container (120) comprises an opening (124) that provides access into the container (120), and wherein
the joint assembly (146) of the guiding device (140) is coupled inside the container (120) at a distance from the opening (124), the distance being less than a width of the opening (124) of the container (120).

3. The arrangement (100) as claimed in claim 2, wherein the joint assembly (146) of the guiding device (140) is located, as seen from a front of the opening (124) of the container (120), at a position lying between opposite side portions (124A) of the opening (124) of the container (120).

4. The arrangement (100) as claimed in any one of the preceding claims, wherein the guider (142) of the guiding device (140) comprises at least one roll (142B) for guiding the elongated string (132) of the lifting device (130).

5. The arrangement (100) as claimed in any one of the preceding claims, wherein the stretcher (110) is configured to be suspended below the guider (142) of the guiding device (140).

6. The arrangement (100) as claimed in any one of the preceding claims, wherein the guider (142) of the guiding device (140) is configured to locate outside the container (120) when the arrangement (100) is in the loading position (102A), and wherein the guider (142) of the guiding device (140) is configured to locate inside the container (120) when the arrangement (100) is in the transport position (102B).

7. The arrangement (100) as claimed in any one of the preceding claims, wherein the boom structure (144) of the guiding device (140) comprises
a first boom (144A), and
a second boom 144B arranged at an angle relative to the first boom (144A), wherein the guider (142) is coupled to the second boom (144B).

8. The arrangement (100) as claimed in any one of the preceding claims, wherein the joint assembly (146) comprises
a base (146A) coupled into the container (120), and
a cylindrical joint (146B) coupling the boom structure (144) to the base (146A) of the joint assembly (146), wherein the boom structure (144) is configured to be turned about the cylindrical joint (146B).

9. The arrangement (100) as claimed in claim 8, wherein the cylindrical joint (146B) of the joint assembly (146) is arranged parallel to the horizontal plane of the container (120).

10. The arrangement (100) as claimed in claim 8 or 9, wherein the joint assembly (146) of the guiding device (140) further comprises
a second cylindrical joint (146C) coupling the base (146A) of the joint assembly (146) to the container (120), wherein the base (146A) of the joint assembly (146) is configured to be turned about the second cylindrical joint (146C).

11. The arrangement (100) as claimed in claim 10, wherein the second cylindrical joint (146C) is arranged perpendicular to the horizontal plane of the container (120).

12. The arrangement (100) as claimed in any one of the preceding claims, wherein the lifting device (130) is a winch.

13. The arrangement (100) as claimed in any one of the preceding claims, wherein the arrangement (110) comprises at least one guiding roll (200) via which the elongated string (132) is guided from the lifting device (130) to the guiding device (140).

14. The arrangement (100) as claimed in any one of the preceding claims, wherein the guider (142) is fixed to the boom structure (144), and wherein the boom structure (144) is rotatably coupled to the joint assembly (146).

15. The arrangement (100) as claimed in any one of the preceding claims, wherein the container (120) comprises an interior (123) comprising a lower space (123A) and an upper space (123B), wherein the upper space (123B) locates above the lower space (123A), and wherein
the lifting device (130) is arranged to locate at least partially in the upper space (123B) of the interior (123), and
the guiding device (140) is arranged to locate at least partially in the lower space (123A) of the interior (123).
